# EUROPEAN PATENT APPLICATION

(11) **EP 4 675 835 A1**
(43) Date of publication of application: **07.01.2026**
(21) Application number: 24905149.1
(22) Date of filing: 16.08.2024
(51) Int. Cl.: H01M 50/528, H01M 50/533, B21D 28/00

(54) **CONNECTING PIECE, BATTERY AND PUNCH**

(30) Priority: 13.05.2024 CN 202421034369 U
(71) Applicant: Eve Power Co., Ltd., Jingmen, Hubei 448000 (CN)
(72) Inventor: LI, Qiuping, Jingmen, Hubei 448000 (CN); ZHU, Pengxiang, Jingmen, Hubei 448000 (CN); CHEN, Xianyang, Jingmen, Hubei 448000 (CN); ZHANG, Minhui, Jingmen, Hubei 448000 (CN); QIU, Zhangheng, Jingmen, Hubei 448000 (CN)
(74) Representative: Berggren Oy
(86) International application number: PCT/CN2024/112684
(87) International publication number: WO 2025/236444

(57) **Abstract**

A connecting plate, a battery and a punch are provided. The connecting plate includes a tab connecting part and a post connecting part. The post connecting part is connected to one side of the post connecting part, and the post connecting part is provided with a welding area configured to be in contact with a welding laser. The post connecting part in the welding area 103 is provided with a rough surface, and the rough surface is provided with a plurality of grooves with different shapes and/or sizes

## Description

This application claims priority to Chinese Patent Application No. 202421034369.X, filed on May 13, 2024, the disclosures of which are incorporated herein by reference in their entireties.

### TECHNICAL FIELD

The present disclosure relates to the field of battery technology, and in particular to a connecting plate, a battery and a punch.

### BACKGROUND

A lithium battery has advantages such as small size, high energy density, long service life, and environmental friendliness, and it is widely used in industries such as automobiles, electronics, and energy storage systems. In related technologies, the connecting plate of the lithium battery serves as the structure connecting the cell pack and the post, the main connection method is using laser penetrating welding to weld the connecting plate to the surface of the post.

### TECHNICAL PROBLEM

In related technologies, the materials of the connecting plate and the post are different. Due to the difference in materials, during laser welding, the laser reflectivity and the laser absorption rates are different, it is difficult to melt the materials quickly and easy to form a high reflectivity, leading to an unstable connection between the connecting plate and the post, and increasing the risk of detachment.

### SUMMARY

In a first aspect, the present disclosure provides a connecting plate configured for connecting a post and a tab of the battery. The connecting plate includes:
a tab connecting part; and,
a post connecting part, connected to one side of the tab connecting part; wherein the post connecting part is provided with a welding area configured to be in contact with a welding laser; the post connecting part in the welding area is provided with a rough surface, and the rough surface is provided with a plurality of grooves with different shapes and/or sizes.

In a second aspect, the present disclosure also provides a battery. The battery includes a connecting plate, and the connecting plate includes:
a tab connecting part; and,
a post connecting part, connected to one side of the tab connecting part; the post connecting part is provided with a welding area configured to be in contact with a welding laser; the post connecting part in the welding area is provided with a rough surface, and the rough surface is provided with a plurality of grooves with different shapes and/or sizes.

In a third aspect, the present disclosure also provides a punch configured for preparing a connecting plate. The punch includes:
a connecting part, configured to be connected to a machine tool; and,
a stamping part, arranged opposite to the connecting part and configured to stamp the welding area of the connecting plate; an end of the stamping part facing the welding area is provided with a plurality of stamping protrusions, and the plurality of stamping protrusions are configured to correspond to the plurality of grooves.

### BENEFICIAL EFFECTS

In the technical solutions of the present disclosure, the tab connecting part is configured to be connected to the tab, the post connecting part is provided with the welding area configured to connect to the post by welding, which can enhance a connection strength between the post connecting part and the post. Meanwhile, the welding area is provided with the rough surface, the rough surface can increase a surface refractive index of the welding area and improve a laser absorption rate of the welding area, so that the post connecting part in the welding area can be quickly melted and connected, thereby improving a machinability of the post connecting part and the post, reducing a welding difficulty between the post connecting part and the post, thereby enhancing the connection strength between the post connecting part and the post, and reducing a probability of the post connecting part falling off from the post. Meanwhile, a purpose of providing multiple grooves with different shapes and/or sizes is to increase a roughness of the rough surface, thereby improving a machinability of the welding area.

### BRIEF DESCRIPTION OF THE DRAWINGS

FIG. 1 is a structural diagram of the connecting plate provided in some embodiments of the present disclosure;
FIG. 2 is a microscopic image of a rough surface in FIG. 1;
FIG. 3 is an enlarged diagram of a groove in FIG. 2;
FIG. 4 is a structural diagram of the punch provided in some embodiments of the present disclosure;
FIG. 5 is a microscopic image of a stamping part in FIG. 4;
FIG. 6 is a diagram showing a preparation process of the punch provided in the present disclosure;

### Explanation of reference numerals:

100 connecting plate; 101 tab connecting part; 102 post connecting part; 103 welding area; 104 rough surface; 105 groove;
200 punch; 201 stamping part; 202 connecting part; 203 stamping protrusions;
300 machining slot; 400 electrical discharge machine.

### DETAILED DESCRIPTION

### Embodiment 1

In related technologies, a connecting plate of a lithium battery serve as the structure connecting a cell pack and a post, a main connection method is using laser penetrating welding to weld the connecting plate to the surface of the post. However, materials of the connecting plate and the post are different. Due to the difference in materials, during laser welding, the laser reflectivity and the laser absorption rates are different, it is difficult to melt the materials quickly and easy to form a high reflectivity, leading to an unstable connection between the connecting plate and the post, and increasing the risk of detachment.

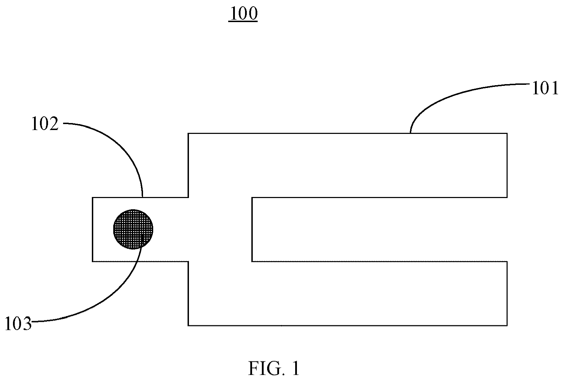

In view of this, the present disclosure provides a connecting plate 100. FIGs. 1-3 are structural diagrams of the connecting plate 100 provided in some embodiments of the present disclosure. The connecting plate 100 provided in the present disclosure has a laser high refractive index and can absorb a large amount of energy generated by the laser. A difficulty of welding with the post is reduced, a connection strength is enhanced, and the risk of detachment is reduced. The connecting plate 100 will be described in detail with reference to the main drawings below.

Referring to FIG. 1, FIG. 2 and FIG. 3, the present disclosure provides a connecting plate 100 configured to connect a post and tabs of a battery. The connecting plate 100 includes a tab connecting part 101 and a post connecting part 102. The post connecting part 102 is connected to one side of the post connecting part 101, and the tab connecting part 101 is provided with a welding area 103 configured to be in contact with a welding laser. The post connecting part 102 in the welding area 103 is provided with a rough surface 104, and the rough surface 104 is provided with a plurality of grooves 105 with different shapes and/or sizes.

In the technical solutions of the present disclosure, the tab connecting part 101 is configured to be connected to the tab. The post connecting part 102 is provided with the welding area 103 configured to connect to the post. By adopting a welding method for connection, the connection strength between the post connecting part 102 and the post can be enhanced. Meanwhile, the welding area 103 is provided with the rough surface 104, which can increase a surface refractive index of the welding area 103 and improve the laser absorption rate of the welding area 103, so that the post connecting part 102 in the welding area 103 can be quickly melted and connected, thereby improving a machinability of the post connecting part 102 and the post, reducing a welding difficulty between the post connecting part 102 and the post, thereby enhancing the connection strength between the post connecting part 102 and the post, and reducing a probability of the post connecting part 102 falling off from the post. Meanwhile, a purpose of providing multiple grooves 105 with different shapes and/or sizes is to improve a roughness of the rough surface 104, thereby improving a machinability of the welding area 103.

It should be noted that, in this embodiment, the tab connecting part 101 and the post connecting part 102 are integrally formed.

Specifically, in this embodiment, a material of the connecting plate 100 is aluminum, and a material of the post is copper. Because the surfaces of copper and aluminum are excessively smooth, during welding, the surfaces are prone to high laser refraction and low absorption rate, so that it is difficult to melt the materials quickly and easy to form the high reflectivity, leading to a risk that the post connecting part 102 falls off from the post. The welding area 103 is provided with the rough surface 104, during welding, the laser absorption rate of the welding area 103 can be increased, so that the welding area 103 and the post can be melted quickly, thereby improving the machinability of the post connecting part 102, reducing the welding difficulty between the post connecting part 102 and the post, and enhancing the connection strength between the post connecting part 102 and the post.

It should be noted that, in order to ensure the connection strength, the tab connecting part 101 is welded to the tab, and the post connecting part 102 is welded to the post. The tab connecting part 101 includes a main body and two connecting sub-parts. One side of the main body is connected to the post connecting part 102, and the other side of the main body is connected to the two connecting sub-parts, which are spaced apart.

It should be noted that, a formation process of the rough surface 104 is not limited and can be selected based on actual situation. In this embodiment, the rough surface 104 is formed on the surface of the post connecting part 102 in the welding area 103 through a stamping process. Specifically, the connecting plate 100 is placed on a stamping machine, with the welding area 103 corresponding to the punch 200 of the machine. The punch 200 is provided with multiple stamping protrusions 203. When the punch 200 stamps the surface of the welding area 103, a pattern in the punch 200 is imprinted onto the welding area 103, so that the multiple grooves 105 are formed in the welding area 103. Therefore, the surface of the welding area 103 is no longer smooth and flat, the multiple grooves 105 increase the surface roughness of the welding area 103, thereby forming the rough surface 104.

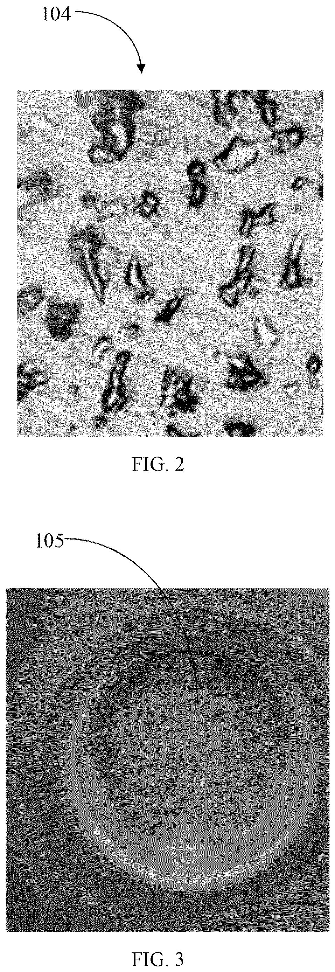

Referring to FIG. 2 and FIG. 3, the shapes of the grooves 105 are not limited, and the grooves 105 are arranged irregularly. This configuration is designed to increase the roughness of the rough surface 104, allowing the welding area 103 to better handle the high laser reflectivity. Specifically, in some embodiments, the shapes of the groove 105 include at least two of circle, ellipse, irregular circle, polygon, and irregular polygon. More specifically, in one embodiment, the shapes of the grooves 105 include circle, ellipse, triangle, square, and rectangle. The circle, ellipse, triangle, square, and rectangle are arranged irregularly. It should be noted that, referring to FIG. 2, FIG. 2 is a microscopic image of the welding area 103. It can be seen from FIG. 2 that, in actual production process, the shapes of the grooves 105 are mostly irregular, this is because the stamping protrusions 203 of the punch 200 have irregular shapes.

Specifically, in some embodiments, a surface area of the welding area 103 is S1, and a surface area of the rough surface 104 is S2, S2 = aS1, and a is a first coefficient, with 0.15 ≤ a ≤ 1. It should be noted that when a ratio of the surface area of the rough surface 104 to the surface area of the welding area 103 is less than 0.15, the surface area of the rough surface 104 is small, and there are fewer areas with lower laser reflectivity. Therefore, the welding area 103 has the high laser reflectivity, thereby increasing the welding difficulty between the welding area 103 and the post, reducing the connection strength between the connecting plate 100 and the post, and increasing the risk of detachment. When the ratio of the surface area of the rough surface 104 to the surface area of the welding area 103 is greater than 1, the rough surface 104 extends beyond the welding area 103, causing the roughness of an area of the post connecting part 102 that extends beyond the welding area 103 to increase. It should be noted that when the roughness increases, a surface smoothness decreases correspondingly. A decrease in smoothness can make the post connecting part 102 to be easily corroded by water vapor and other elements in the air, resulting in a reduced service life of the connecting plate 100, which is counterproductive. Specifically, when the surface area of the rough surface 104 is 0.15 to 1 times the surface area of the welding area 103, that is, when a is within a range of 0.15 to 1, it can reduce the welding difficulty between the welding area 103 and the post, enhance the connection strength between the connecting plate 100 and the post, ensure the service life of the connecting plate 100, and prevent the connecting plate 100 from being corroded.

In some embodiments, each of the grooves 105 has a first dimension L1, which is defined as a distance between two parallel planes that virtually abut against groove walls on both sides of each of the grooves 105 ("virtually abut against" refers to that, when measuring the dimension of the groove, two ends of a dimension line coincide with a straight line of the groove wall). Particularly, L1 ≥ 0.1 mm. It should be noted that due to the different sizes of the posts, the sizes of the welding area 103 vary, the area of the rough surface 104 is also different, and the number of grooves 105 varies. Generally, the surface area of the rough surface 104 is related to the size of the post. As the size of the post changes, when the size of the post increases, in order to ensure the connection strength, the surface area of the welding area 103 increases accordingly, the surface area of the rough surface 104 also increases accordingly, and the number and sizes of the grooves 105 also increase accordingly. When the size of the post decreases, the area of the welding area 103 decreases accordingly, the surface area of the rough surface 104 also decreases accordingly, and the number and sizes of the grooves 105 also decrease accordingly. It should be noted that, after research by the applicant, it was found that when the first dimension of the groove 105 is greater than or equal to 0.1 mm, it can significantly improve the laser reflectivity of the welding area 103. When the first dimension is less than 0.1 mm, although it still can improve the roughness of the rough surface 104, the improvement effect on the laser reflection phenomenon of the welding area 103 is relatively small. Therefore, the first dimension needs to be greater than or equal to 0.1 mm. In some embodiments, the first dimension of the groove 105 is 0.1 mm, which can significantly improve the laser reflectivity of the welding area 103.

It should be noted that the groove 105 is provided with an opening, and the opening has a width. The first dimension is a maximum width of the opening.

In some embodiments, a depth of each of the grooves 105 is H1, and 5 µm ≤ H1 ≤ 100 µm. It should be noted that when the depth of the groove 105 is less than 5 µm, the roughness of the rough surface 104 is relatively low, and the laser reflectivity of the welding area 103 is more obvious, which increases the welding difficulty between the welding area 103 and the post, and reduces the connection strength between the welding area 103 and the post. When the depth of the groove 105 is greater than 100 µm, a deformation of the post connecting part 102 is too large, resulting in significant overall deformation of the connecting plate 100, which reduces its service life. Specifically, the depth of the groove 105 can be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 91 µm, 92 µm, 93 µm, 94 µm, 95 µm, 96 µm, 97 µm, 98 µm, 99 µm, and 100 µm.

In some embodiments, a thickness of the post connecting part 102 is H2, and 0.4 mm ≤ H2 ≤ 2 mm. It should be noted that when the thickness of the post connecting part 102 is less than 0.4 mm, the strength of the post connecting part 102 decreases correspondingly. During the stamping process to form the rough surface 104, the post connecting part 102 may fracture due to insufficient strength. When the thickness of the post connecting part 102 is greater than 2 mm, the welding difficulty increases when the post connecting part 102 is welded to the post. The thickness of the post connecting part 102 can be 0.4 mm, 0.5 mm, 0.6 mm, 0.7 mm, 0.8 mm, 0.9 mm, 1.0 mm, 1.1 mm, 1.2 mm, 1.3 mm, 1.4 mm, 1.5 mm, 1.6 mm, 1.7 mm, 1.8 mm, 1.9 mm, 2.0 mm.

It should be noted that, Sz is a maximum height difference of a measurement plane, and Sz is typically the surface roughness measured using a depth-of-field measuring instrument. During a specific operation, an area of the rough surface 104 is selected, and the depth-of-field measuring instrument is aligned with this area to measure the surface roughness of the area. Specifically, in this embodiment, the surface roughness of the welding area 103 is Sz, and 0.5 µm ≤ Sz ≤ 50 µm. It should be noted that, when the roughness of the welding area 103 is less than 0.5 µm, the laser reflectivity of the welding area 103 is obvious, the welding difficulty between the welding area 103 and the post is increased, and the connection strength between the welding area 103 and the post is decreased. When the surface roughness of the welding area 103 is greater than 50 µm, the welding area 103 is easy to be corroded by water vapor and other elements in the air, resulting in a corrosion of the connecting plate 100 and affecting its service life.

Rz is a maximum height difference of a measured profile line, and Rz is typically measured by using a roughness measuring instrument. The roughness measuring instrument is placed at a position to be measured, a probe is aligned with the welding area 103, and the roughness measuring instrument is started. The probe will trace a line across the surface of the welding area 103, and the surface roughness of the welding area 103 can be calculated according to this line. Specifically, in this embodiment, the surface roughness of the welding area 103 is Rz, and 0.5 µm ≤ Rz ≤ 50 µm. It should be noted that, when the surface roughness of the welding area 103 is less than 0.5 µm, the laser reflectivity of the welding area 103 is obvious, the welding difficulty between the welding area 103 and the post is increased, and the connection strength between the welding area 103 and the post is decreased. When the surface roughness of the welding area 103 is greater than 50 µm, the welding area 103 is easy to be corroded by water vapor and other elements in the air, resulting in the corrosion of the connecting plate 100 and affecting its service life.

It should be noted that the measuring method for the surface roughness of the welding area 103 can be selected based on actual situation.

In some embodiments, the depth of each of the grooves 105 is different. In other embodiments, each of the grooves 105 has the first dimension L1, and the first dimension L1 of each of the grooves 105 is different. In other embodiments, a distance between two adjacent ones of the grooves 105 is different. Thus, the depths and widths of the grooves 105, and the distances between the grooves 105 are all different, which allows for varying depths of the structures, increasing the roughness of the rough surface 104, improving the laser reflectivity of the welding area 103, reducing the welding difficulty between the post connecting part 102 and the post, and enhancing the connection strength between the post connecting part 102 and the post.

The present disclosure also provides a battery including a post, a tab, and a connecting plate 100. The connecting plate 100 is connected between the post and the tab. Since this battery adopts all the technical solutions of all the embodiments of the connecting plate 100, therefore it has all the beneficial effects brought by the technical solutions of the embodiments of the connecting plate 100, and these will not be reiterated here.

### Embodiment 2

Additionally, because the materials of the connecting plate and the post are different, during laser welding, the laser reflectivity and laser absorption rates are different. Thus, the materials cannot be melted quickly, leading to the high reflectivity and unstable connections between the connecting plate and the post, which increases the risk of detachment. In related technologies, by stamping the connecting plate in a regular manner, the surface roughness of the connecting plate is increased, and the laser reflectivity of the connecting plate is improved, thereby achieving welding. However, the regular stamping requires very high precision of the punch. During repeated stamping, the punch wears out, and when the wear is significant, the requirements cannot be met.

In view of this, the present disclosure also provides a punch 200 configured to prepare the connecting plate 100 of Embodiment 1. The punch 200 provided by the present disclosure has a simple structure, can stamp irregular patterns on the connecting plate 100, and has long service life. The connecting plate 100 will be described in detail with reference to the main drawings below.

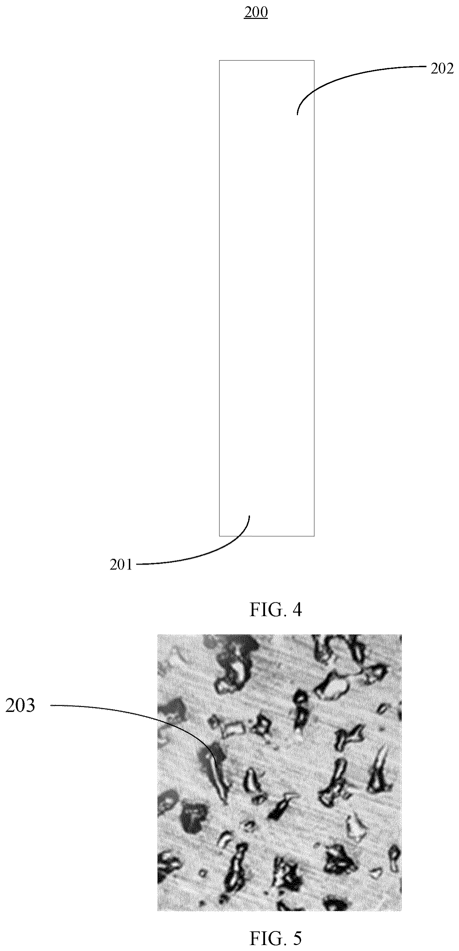

Referring to FIG. 4 and FIG. 5, the punch 200 includes a connecting part 202 and a stamping part 201, and the connecting part 202 is configured to be connected to a machine tool. The stamping part 201 is arranged opposite to the connecting part 202. The stamping part 201 is configured to stamp the welding area 103 of the connecting plate 100. An end of the stamping part 201 facing the welding area 103 is provided with multiple stamping protrusions 203, and the multiple stamping protrusions 203 are configured to correspond to the multiple grooves 105.

In the technical solutions of the present disclosure, the stamping part 201 stamps the connecting plate to form the multiple grooves 105 on the connecting plate 100, thereby increasing the surface roughness of the connecting plate 100, improving the laser reflectivity of the connecting plate 100, reducing the welding difficulty between the connecting plate 100 and the post, and enhancing the connection strength between the connecting plate 100 and the post.

It should be noted that, a formation method of the stamping protrusions 203 is not limited, and the surface of an object can be processed by an electrical discharge machining, sandblasting, texturing, chemical etching, and etc. to form surface patterns (i.e. stamping protrusion 203). Specifically, in this embodiment, the stamping protrusions 203 are formed at an end of the stamping part 201 facing the welding area 103 through electrical discharge machining or chemical etching. The surface roughness achieved by electrical discharge machining or chemical etching is within a range of 1 µm to 100 µm.

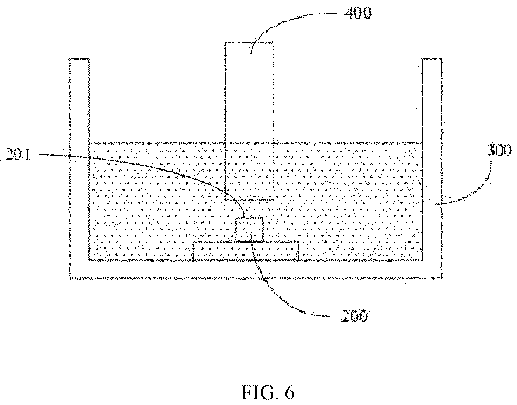

It should be noted that, the electrical discharge machining process is relatively simple, requiring only that the object to be machined is electrically conductive. Therefore, in this embodiment, referring to FIG. 6, the punch 200 to be machined is placed into a machining slot 300 of an electrical discharge machine 400. The machining slot 300 is filled with protection fluid. The electrical discharge machine 400 is then aligned with the punch 200 (i.e., the stamping part 201), and the electrical discharge machine 400 discharges, generating a concentrated amount of heat instantaneously. Small, irregular pits and marks are leaved on the surface of the stamping part 201. By repeating the process, the surface of the stamping part 201 can be covered with irregular pits, and walls of two adjacent pits form the stamping protrusions 203.

More specifically, after the punch 200 is machined, the stamping part 201 is subjected to a nitriding treatment to enhance a surface hardness of the stamping part 201 and increase the service life of the punch 200.

Referring to FIG. 5, the shapes of the stamping protrusions 203 are not limited and the stamping protrusions 203 are arranged irregularly. This configuration requires a low precision for the punch 200. Even if there is slight wear on the punch 200 due to long term use, it will not affect the stamping of the connecting plate 100, thereby improving the service life of the punch 200. Specifically, in some embodiments, the shapes of stamping protrusions 203 include at least two of circle, ellipse, irregular circle, polygon, and irregular polygon. More specifically, in some embodiments, the shapes of stamping protrusions 203 include circle, ellipse, triangle, square, and rectangle. The circle, ellipse, triangle, square, and rectangle are arranged irregularly. It should be noted that, referring to FIG. 5, FIG. 5 is a microscopic image of the stamping protrusions 203. It can be seen from FIG. 5 that, in actual production process, the shapes of most of the stamping protrusions 203 are irregular, which can effectively improve the service life of the punch 200 and reduce costs.

Specifically, in some embodiments, the surface area of the stamping part 201 is S3, and a total surface area of the multiple stamping protrusions 203 is S4, S4 = bS3, and b is a second coefficient, with 0.3 ≤ b ≤ 1. It should be noted that, when a ratio of the total surface area of the multiple stamping protrusions 203 to the surface area of the stamping part 201 is less than 0.15, the number of stamping protrusions 203 formed on the stamping part 201 is relatively small. Therefore, the surface roughness of the stamped connecting plate 100 is lower, the laser reflectivity of the connecting plate 100 is higher, which increases the welding difficulty between the connecting plate 100 and the post, reduces the connection strength between the connecting plate 100 and the post, thereby increasing the risk of detachment. When the ratio of the total surface area of the multiple stamping protrusions 203 to the surface area of the stamping part 201 is greater than 1, the machining difficulty of the stamping part 201 is increased.

In some embodiments, a height of each of the stamping protrusions 203 is H3, and 5 µm ≤ H3 ≤ 100 µm. It should be noted that, when the height of the stamping protrusion 203 is less than 5 µm, the roughness of the welding area 103 on the stamped connecting plate 100 is relatively low, so that the laser reflectivity of the welding area 103 is more obvious, which increases the welding difficulty between the welding area 103 and the post, and reduces the connection strength between the welding area 103 and the post. When the height of the stamping protrusion 203 is greater than 100 µm, during stamping, the deformation of the connecting plate is too large, resulting in significant overall deformation of the connecting plate 100, which reduces its service life. Specifically, the height of the stamping protrusion 203 can be 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 91 µm, 92 µm, 93 µm, 94 µm, 95 µm, 96 µm, 97 µm, 98 µm, 99 µm, and 100 µm.

Specifically, the stamping process of the connecting plate 100 is as follows. Unwind a raw material of the connecting plate 100, form it according to the shapes of the connecting plate 100, place the connecting plate 100 on a mold, assemble the punch 200 onto the mold to align the stamping part 201 with the welding area 103 of the connecting plate 100, and adjust the stamping depth of the mold. During the stamping process, first a coarse stamping is conducted to form an outline of the grooves 105, and then a precision stamping is conducted to form the depth and width of the grooves 105. After blanking and cleaning, the machining of the connecting plate 100 is finished. The surface roughness of the connecting plate 100 is measured by using the depth-of-field measuring instrument or the roughness measuring instrument. Products with the surface roughness Sz within a range of 0.5 µm to 50 µm or the line roughness Rz within the range of 0.5 µm to 50 µm are considered to meet the requirements.

## Claims

1. A connecting plate, configured to connect a post and tabs of a battery, **characterized by** comprising:
a tab connecting part (101); and,
a post connecting part (102), connected to one side of the tab connecting part (101); wherein the post connecting part (102) is provided with a welding area (103) configured to be in contact with a welding laser; the post connecting part (102) in the welding area (103) is provided with a rough surface (104), and the rough surface (104) is provided with a plurality of grooves (105) with different shapes and/or sizes.

2. The connecting plate according to claim 1, **characterized in that** a material of the post is different from a material of the connecting plate.

3. The connecting plate according to claim 2, **characterized in that** the material of the post comprises copper, and the material of the connecting plate comprises aluminum.

4. The connecting plate according to claim 1, **characterized in that** a surface of the post connecting part (102) in the welding area (103) is provided with a rough surface (104) formed by stamping.

5. The connecting plate according to claim 1, **characterized in that** a surface area of the welding area (103) is S1, and a surface area of the rough surface (104) is S2, wherein S2 = aS1, and a is a first coefficient, with 0.15 ≤ a ≤ 1; and/or,
each of .

6. The connecting plate according to any one of claims 1-5, **characterized in that** the grooves (105) has a first dimension L1, and the first dimension L1 is defined as a distance between two parallel planes that virtually abut against groove walls on both sides of each of the grooves (105), wherein L1 ≥ 0.1 mm.

7. The connecting plate according to any one of claims 1-5, **characterized in that** a depth of each of the grooves (105) is H1, wherein 5 µm ≤ H1 ≤ 100 µm; and/or,
a thickness of the post connecting part (102) is H2, wherein 0.4 mm ≤ H2 ≤ 2 mm.

8. The connecting plate according to any one of claims 1-5, **characterized in that** a surface roughness of the welding area (103) is Sz, and 0.5 µm ≤ Sz ≤ 50 µm; or,
the surface roughness of the welding area (103) is Rz, and 0.5 µm ≤ Rz ≤ 50 µm.

9. The connecting plate according to any one of claims 1-5, **characterized in that** shapes of the grooves (105) comprise at least two of circle, ellipse, irregular circle, polygon, and irregular polygon.

10. The connecting plate according to any one of claims 1-5, **characterized in that** the depth of each of the grooves (105) is different; and/or,
each of the grooves has a first dimension L1, and the first dimension L1 of each of the grooves 105 is different; and/or,
a distance between two adjacent ones of the grooves (105) is different.

11. A battery, comprising a connecting plate (100) as claimed in any one of claims 1-10.

12. The battery according to claim 11, **characterized in that** the battery further comprises a post and a tab, the connecting plate (100) is connected between the post and the tab, the post is connected to the post connecting part (102), and the tab is connected to the tab connecting part (101) .

13. A punch, configured to prepare a connecting plate (100) as claimed in any one of claims 1-10, **characterized by** comprising:
a connecting part (202), configured to be connected to a machine tool; and,
a stamping part (201), arranged opposite to the connecting part (202) and configured to stamp the welding area (103) of the connecting plate (100); wherein an end of the stamping part (201) facing the welding area (103) is provided with a plurality of stamping protrusions (203), and the plurality of stamping protrusions (203) are configured to correspond to the plurality of grooves (105).

14. The punch according to claim 13, **characterized in that** the end of the stamping part (201) facing the welding area (103) is provided with a plurality of stamping protrusions (203) formed by an electrical discharge machining or chemical etching method.

15. The punch according to claim 13 or 14, **characterized in that** a surface area of the stamping part (201) is S3, and a total surface area of the plurality of the stamping protrusions (203) is S4, wherein S4 = bS3, and b is a second coefficient, with 0.3 ≤ b ≤ 1.

16. The punch according to claim 13 or 14, **characterized in that** a surface roughness of an end surface of the stamping part (201) facing the welding area (103) is in a range of 1 µm to 100 µm.

17. The punch according to claim 13 or 14, **characterized in that** shapes and/or sizes of the plurality of the stamping protrusions (203) are different.

18. The punch according to claim 13 or 14, **characterized in that** the shapes of the stamping protrusions (203) comprise at least two of circle, ellipse, triangle, square, and rectangle.

19. The punch according to claim 13 or 14, **characterized in that** a height of each of the stamping protrusions (203) is H3, wherein 5 µm ≤ H3 ≤ 100µm.
